# EUROPEAN PATENT SPECIFICATION

(11) **EP 3 031 588 B1**
(45) Date of publication and mention of the grant of the patent: **15.09.2021**
(21) Application number: 15199183.3
(22) Date of filing: 10.12.2015
(51) Int. Cl.: B27D 5/00

(54) **METHOD FOR EDGING HOLLOW CORE WOOD PANELS**
VERFAHREN ZUR ÄTZUNG VON HOHLKERNHOLZPLATTEN
PROCÉDÉ POUR MEULER DES PANNEAUX EN BOIS À NOYAU CREUX

(30) Priority: 12.12.2014 IT PS20140018
(43) Date of publication of application: 15.06.2016
(73) Proprietor: BIESSE S.p.A., 61100 Pesaro (PU) (IT)
(72) Inventor: Pritelli, Giuseppe, 47841 Cattolica (IT)
(74) Representative: Studio Torta S.p.A.

(56) References cited:
- EP-A1- 2 298 517
- EP-A1- 2 308 605
- EP-A1- 2 422 947
- EP-A2- 1 445 082
- EP-A2- 1 800 813
- CH-A1- 699 797
- DE-A1-102006 022 314
- DE-U1-202008 006 997
- None

## Description

The invention relates to a method for edging sandwich hollow core wood panels, as per the preamble of claim 1. Such a method is known from the document CH 699 797 A1.

Sandwich panels, i.e. composite panel-like flat structures, comprising two thin sheets or boards made of relatively high mechanical resistance material, mutually inter-spaced and rigidly connected through a structural adhesive to a connection element with lightness characteristics are known. Such composite structures have considerably better static values with respect to the single relative constituent elements: the connection element is constituted by a light material with relatively low mechanical resistance which allows spacing the boards, intended for the distribution of the loads in the plane, wherein the connection element is intended to increase the flexural rigidity of the panel, which depends on the distance of the boards from the median plane.

Spacing the boards allows obtaining a considerable increase of rigidity with respect to a panel only constituted by a thickness made of the same material as the boards, with a slight increase of weight.

As regards obtaining the connection element, there are used honeycomb structures made of deformed aluminium sheets or moulded plastic material, foam and expanded plastic material. However, though the latter are easy to process at a low cost, honeycomb structures are usually preferred due to their superior mechanical features.

In the furniture industry sandwich panels, which are referred to as hollow core wood panels in this specific industry, are commonly used.

Hollow core wood is a type of panel used for obtaining furniture particularly valued for lightness; hollow core wood is constituted by two plywood boards or sheets, medium density fibreboard (mdf) or chipboard glued in a sandwich fashion by interposing a plastic or aluminium honeycomb structure.

In this specific furniture industry sector, the hollow core wood panel is covered and edged; the latter operation is particularly sensitive as regards the hollow core wood panels.

### State of the art

EP 2 298 517 discloses a sandwich panel made of two outer layers of wood or similar and an intermediate layer of a lighter filling material. In order to prepare the sandwich panel for edgebanding a milling step is necessary to form in both layers respective notches shaped in such a manner as to be filled with a thermoplastic edge band.

From CH 699 797 A1 a similar sandwich panel is known in which the edge band of thermoplastic material is provided with an upper and a lower recess for the engagement of the two layers of the panel to be bonded by oscillation forces.

In DE 20 2008 006 997 U1 a sandwich panel is described having a multilayer supporting band inserted and glued in corresponding recesses of the upper and lower plate.

EP 1 800 813 A2 dislcoses a method for coating panels with sheets of veneer bonded to the supporting plate by means of a glue layer to be activated by laser radiation.

DE 10 2006 022 314 A1 refers to a thermoplastic seal element for a light building board. Said seal element is provided with grooves to be glued at the edges of the board plates.

### Description of the specific technical problem

In the furniture industry, the edging technique consists in the perimeter application of strips covering value enhancement material and/or solely covering/decorative material, constituted with various types of materials on the thickness of wooden or, more often, wood surrogate panels.

In the usual production methods, such types of covering material are constituted by synthetic material webs, continuously applied by automatic machines - the so-called edging machines - which unwind the web from reels, cut it into segments appropriate to the specific panel perimeter, apply the adhesive material thereon on a face or activate the adhesive material present thereon and make it adhere to the panel on the perimeter, at the exact correspondence of the thickness of the relative edge and followed by subsequent trimming where necessary.

In the most modern implementations, such strips of edging material are constituted by a polymeric web, usually polypropylene, made of one component but obtained in two co-extruded layers with different melting points: the layer intended to remain externally exposed in the finished product has a higher melting point while the internal layer has a lower melting point, so as to be more suitable to be heat sealed, in solidification, to the edge of the panels without requiring additional resins and/or glues.

According to the prior art, the heat-activation of the meltable face of polymeric webs thus made is attained by heating the face of the edge before it is placed at contact and pressed against the edge of the panel.

The heat-activation of the meltable face of polymeric edging webs thus made requires considerable heat; the means used for this purpose according to the prior art are the laser beam, hot plasma, radiation with thermal radiation and forced convection with heated air.

When the formats are variable, i.e. in case of panels with different dimensions intended to constitute the various parts of the piece of furniture and not fixed formats (for example door leaves, where the standardisation of the format makes the systematic framing of the hollow core wood using solid wood strips economically feasible), the edging operation is particularly sensitive with reference to the hollow core wood panels with respect to other types of panels in the specific furniture industry; in that the edges are mainly dominated by the projections of the boards, only with which it interferes with the edging element, when not specifically dimensioned and shaped to penetrate therebetween, though being specifically shaped and dimensioned the shaping and dimensioning in question is however detrimental to the intuitive polyvalence and multi-functionality needs of the webs and thus to the economicity needs, whereas the application of the polyvalent edging webs for solid panels leads to limited adhesion of the hollow core wood panels to the thin edges of the two boards delimiting the sandwich filling material, with an absolutely unsatisfactory load resistance of the panel along the relative perimeter.

### Objects of the invention

Thus, in this context, the main object of the present invention is to provide an innovative method for edging the edges of hollow core wood panels in the furniture industry capable of allowing using edging webs not specifically dimensioned and shaped as a function of the final hollow core wood panels and thus polyvalent for any dimension of the hollow core wood panel and also functional for the solid panels.

Another object of the present invention is to attain the previous object through a method capable of attaining a satisfactory load resistance of the hollow core wood panel along the entire relative perimeter.

Another object of the present invention is to attain the previous objects through a method capable of maintaining the web barrel even when it encounters vacuum in the distant interface with the sandwich filler delimited by the two outer boards of the hollow core wood panel.

Still, another object of the present invention is to attain the previous objects through a method capable of allowing actuation thereof through simple modifications of the machines and production lines according to the prior art.

Another object of the present invention is to attain the previous objects through a method capable of allowing polyvalence for dimensions of the webs, reducing the overall dimensions, instantaneous on-off effect, adjustment according to dispensable heat, reducing energy consumption and dispersion, modularity as regards alternative applications, simplicity in terms of maintenance and interchangeability.

Still, a further object of the present invention is to attain any one of the previous objects through a method that is simple and efficient, safe to use and relatively inexpensive considering the actual results attained therewith.

### Summary of the solution concept

These and other objects are attained through the method for edging hollow core wood panels in the industrial production of furniture according to the present invention comprising knurling or embossing or surface roughness modelling shaped with transverse roughness (orthogonal to the linear dimension axis) preferably with strip or rib grooves parallel to peaks and valleys equally spaced and equally sectioned projecting on at least one face, or face portion, of a thermoplastic web, preferably polymeric and preferably grooved on site or simultaneously with the production extrusion of the web; application of the web on the edges of hollow core wood panels, abutting against the projections of the boards prominently dominating on the edges with respect to the spacing/connection thickness material interposed therebetween, with supply to the continuous or step-by-step advancement of said web guided and held in adhesive convergence at the edges of the panels, with grooved face interfaced at contact with said projections; surface softening/melting, before or subsequent to the convergence of the web abutting the projections of the boards, of longitudinal bands of the grooved face of the web, limitedly to the abutment lines and neighbouring areas, preferably immediate neighbouring, of the projections of the boards; mutual pressing of the web and edges, by means of projection portions, exerted on the web and/or on the panel; adhesion of the web to the edges of the panel through penetration and cohesion of the projections of the boards of the edges in the surface molten or softened abutmend lines of the grooved face of the web and subsequent recovery; attainment of a stable coupling of the projections of the boards within the molten grooved abutment lines and re-solidified by interposing ribs between the boards to efficiently counter the compression loads along the entire periphery of the panel.

### Description of the attached drawings

Further characteristics and advantages of the method for edging hollow core wood panels according to the present invention shall be more apparent from the following detailed description of a preferred but non-exclusive embodiment thereof, represented solely by way of non-limiting example with reference to the attached drawings, wherein:
Figures 1 and 2 respectively represent perspective views of a first embodiment of a device for the implementation of the method according to the present invention;
Figures 3 and 4 respectively represent perspective views of a second embodiment of a device for the implementation of the method according to the present invention;
Figures 5 and 6 respectively represent perspective views of a third embodiment of a device for the implementation of the method which is not part of the invention;
Figure 7 illustrates a perspective view of a detail of an embodiment of an edging thermoplastic web for the implementation of the method according to the present invention;

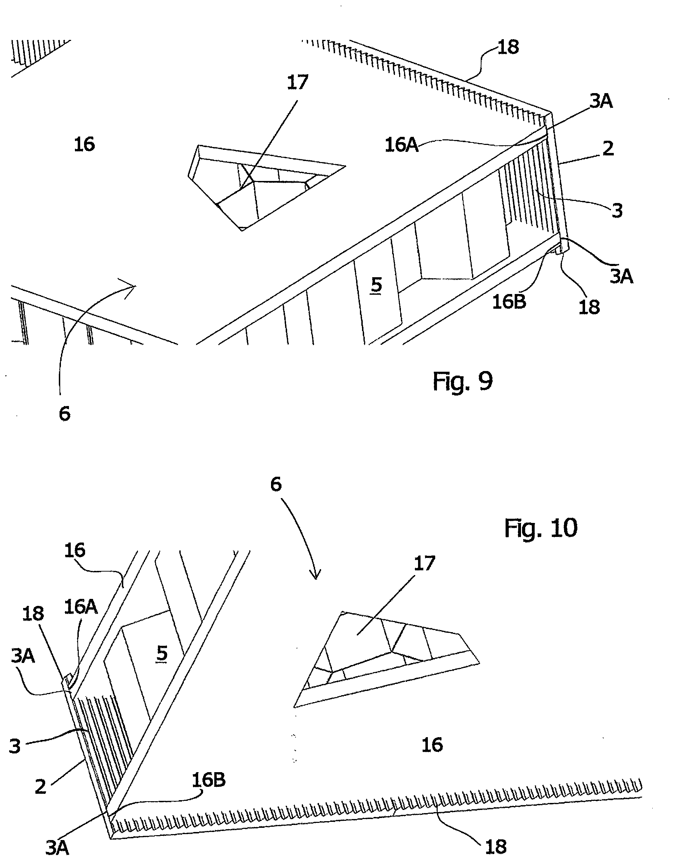

Figures 8, 9 and 10 show three perspective views, the latter two also comprising partial sectional views, of a hollow core wood panel schematically illustrated as edged to implement the method according to the present invention.

### Static description of the embodiments

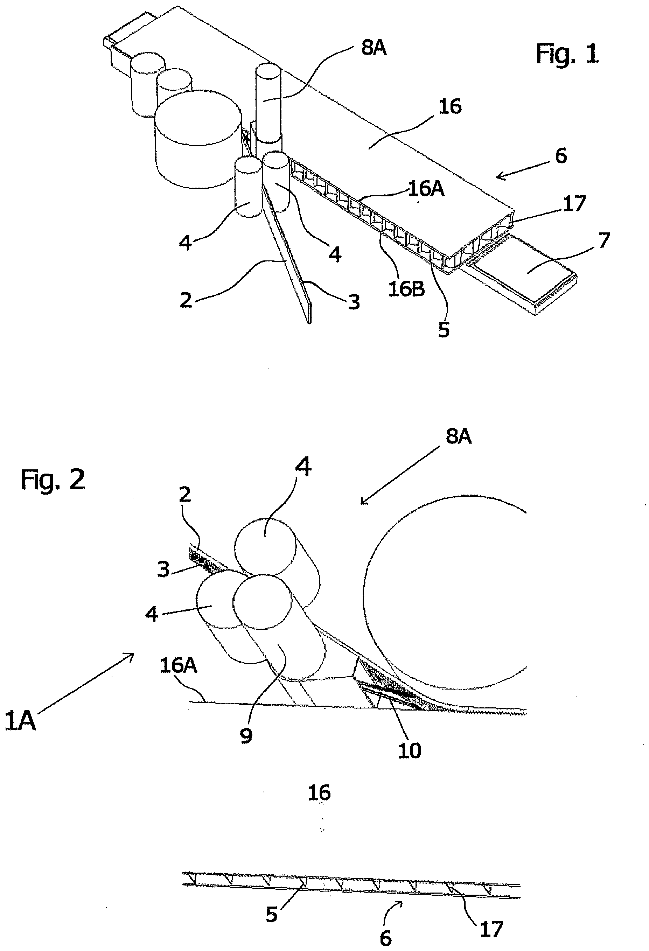

With reference to such figures, and in particular with reference to figures 1 and 2, a first embodiment of the device 1A for edging panels for implementing the method according to the present invention, in which the edging web 2 is advanced and guided by batteries of supply rollers 4, appropriately driven or idle, which make it move and converge, continuously, on the edges 5 of hollow core wood panels 6, carried to transit in succession by a conveyor 7.

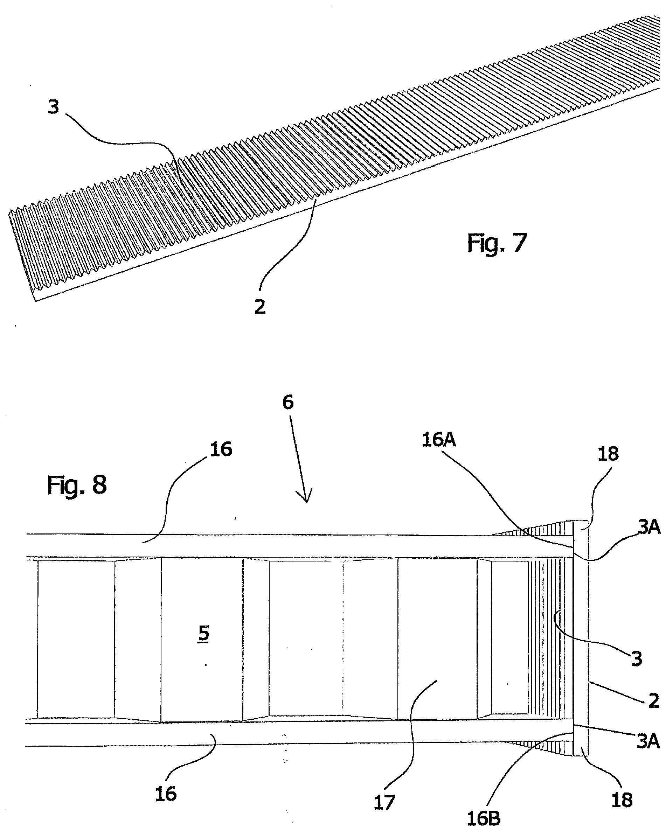

The edging web 2 is made of thermoplastic material, preferably polymeric, and it has - at least on a face 3 thereof, or portion thereof, surface embossing or knurling or surface roughness modelling, indicated with the same reference number 3, shaped with surface roughness (orthogonal to the linear dimension axis) preferably with strips or ribs parallel to peaks and valleys equally spaced and equally shaped prominently projecting, according to the embodiment illustrated in figure 7.

Downstream of the rotary sonotrode 14 there are provided solidification pressure rollers 15, for the functions better illustrated hereinafter.

The panel 16 is of the sandwich type made of composite materials referred to as "hollow core wood", constituted by a sandwich of two wooden or surrogate wood boards 16 between which a honeycomb structure 17, preferably made of plastic or aluminium material, is interposed.

The same figures illustrate according to the invention before surplus material trimming interventions 18, the edging web 2 made of thermoplastic material, preferably polymeric, and relative face 3 shaped with transverse roughness (orthogonal to the linear dimension axis) with equally spaced and equally shaped strip or rib grooves parallel to peaks and valleys, associated to the edges of the hollow core wood panel 6, for implementing the method according to the present invention outlined hereinafter.

### Dynamic description of embodiments

Thus, having completed the static description of preferred embodiments of the method for edging hollow core wood panels obtained according to the present invention, below is the dynamic description:
The method for edging hollow core wood panels in the industrial production of furniture according to the present invention may be implemented by means of any device suitable for melting/softening two parallel abutment lines 3A of the inner grooved face 3 of the edging web 2 intended for joining the molten/softened abutment lines 3A with the projections 16A and 16B of the boards 16 of the edges 5 of the hollow core wood panels 2, so that said projections 16A and 16B remain trapped therein upon solidification and the edges 5 of the hollow core wood panels 2 remain thus edged, without deforming the edging web 2 for portion gaps without the internal abutment barrel, wherein a longitudinal vacuum remains between the boards 16 at the thickness of the honeycomb 17, or any other filler material.

Bonding occurs by melting the surface of said sealable face 3 in the abutment lines 3A regarding the boards 16 of the hollow core wood panel 6, so that - due to the bonding pressure - there is formed a coupling between the edging web 2 and the boards 16, this solution creates an exceptional reinforcement on the compression loads along the entire periphery of the panel.

The surplus material 18 of the edging web 3 is then trimmed and the corners of the web 3 curved on the planes of the boards 16, using any prior art or innovative technique whereas the inner edges of the grooves 3 of the web are left to perimetrically and mutually reinforce the boards 16 to provide the perimeter load functionalities thereof.

In this context, the local heating of the adherence and coupling abutment lines 3A may be carried out using any means suitable to direct heat energy in a limited manner to the areas in question.

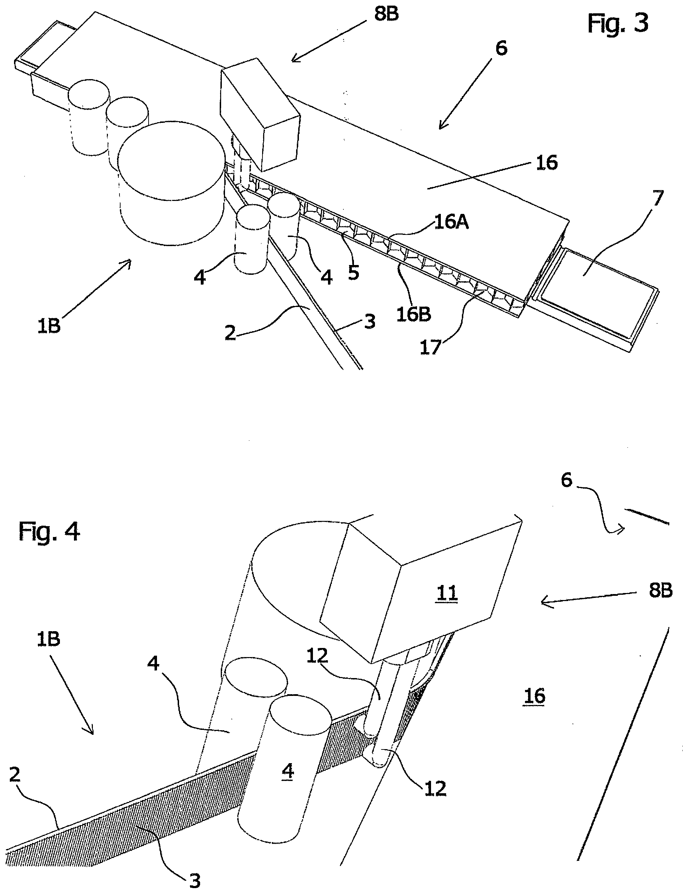

A first example is illustrated in figures 1 and 2, wherein a laser beam 10, is directed by deflector mirrors to melt the two parallel abutment lines 3A (see fig. 3) of the inner grooved face 3 of the edging web 2, intended to join boards 16 of the edges 5 of the hollow core wood panels 2 with the projections 16A and 16B instead of melting the entire inner face of the web like in the prior art applications.

A second example is illustrated in figures 3 and 4, wherein the hot air or plasma flow, i.e. ionised gas, is directed by adjustable ducts or mobile nozzles 12 to melt the two parallel abutment lines 3A of the inner grooved face 3 of the edging web 2, intended to join the boards 16 of the edges 5 of the hollow core wood panels 2 with the projections 16A and 16B.

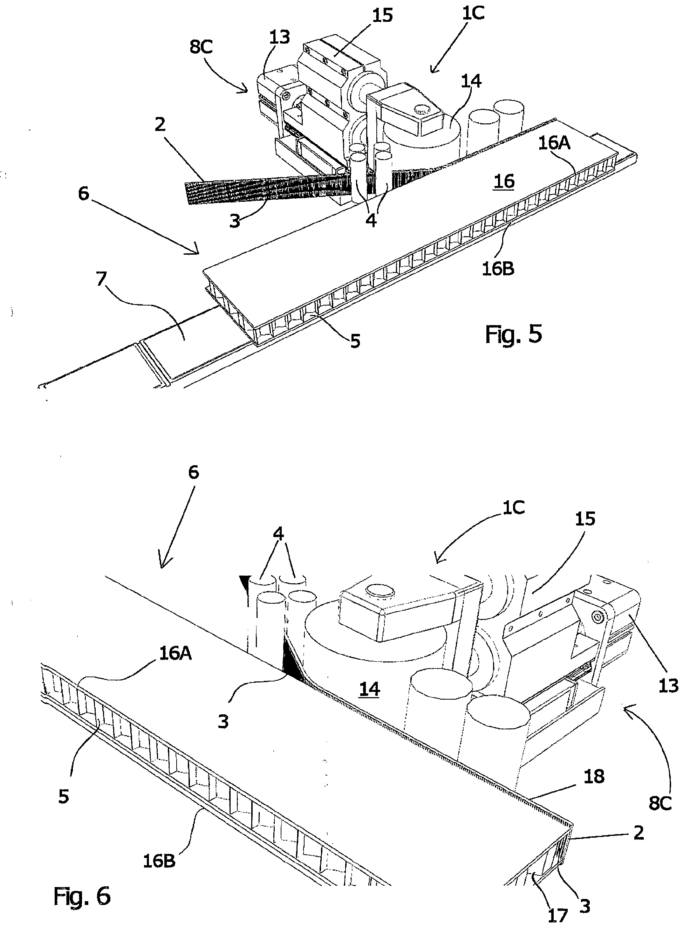

A third example is illustrated in figures 5 and 6.

The polymeric thermoplastic edging web 2 with grooved face 3 is wound from a supply reel, not illustrated, and advanced on a path thereof by the supply rollers 4.

When the edging web 2 reaches in front of the bonding unit 8C, the rotary sonotrode 14 (which could alternatively also be flat on the same plane with step by step advancement of the web 3) is pressed against the edge 5 of the panels 6 by interposing the web 2, to which it transmits ultrasonic vibrations which exclusively make the reliefs and crests projecting on the grooved face 3 of the polymeric thermoplastic edging web 2 to vibrate.

Such ultrasonic vibration leads to the sole and exclusive heat bonding of the abutment lines 3A of the reliefs of the grooved face 3 of the edging web 2 which are subjected to pressure against the projections 16A, 16B of the boards 16 of the hollow core wood panel 6 in the molten abutment lines 3A of the grooved face 3 of the polymeric resin web 2 upon cooling, thus trapping - by cohesion - the projections 16A, 16B of said boards 16 between which there is interposed said honeycomb structure 17, or even the "coupling effect" of the projections 16A, 16B of the boards 16 in the abutment lines 3A of molten thickness of the roughness of the face 3 of the edging web 2.

A fourth example, not illustrated, for implementing the method for edging the hollow core wood panels in the industrial production of furniture according to the present invention may be conceived through heat radiation, variously generated in a manner suitable for the purpose, concentrated and directed by means of optical fibres to melt the two parallel abutment lines 3A of the inner grooved face 2, intended to join boards 16 of the edges 5 of the hollow core wood panels 2 with the projections 16A and 16B.

Other systems for implementing the method for edging hollow core wood panels in the industrial production of furniture according to the present invention may also be applied.

### Alternative embodiments

It is obvious that the alternative embodiments, still falling within the innovative concept of the embodiment illustrated above and claimed below, the method for edging hollow core wood panels in the industrial production of furniture according to the present invention shall also be implemented and obtained differently, through equivalent technical and mechanical solutions same case applying to the relative procedural steps may vary in a manner suitable for the purpose;

In particular, as previously mentioned, the supply of the web to the edge in the edging devices may also be of the step by step type instead of being continuous, if required by the melting technology.

### Advantages of the invention

As observable from the preceding detailed description of a preferred embodiment, the method and as mentioned regarding some variant embodiments, the method for edging the hollow core wood panels in the industrial production of furniture according to the present invention offers advantages corresponding to the attainment of these and other preset objects. as a matter of fact, it integrates a functional, polyvalent and economic method suitable for edging panels made of sandwich composites in the furniture industry using thermoplastic polymeric edging webs without the latter being deformed and using the edging devices according to the prior art.

In particular:
The vertical ribbing, following the localised melting, allows a relatively deep penetration of the projections of the boards into the thickness of the edge, so as to form an actual bracket for supporting, at the head, the apices of the remaining grooving segments, for the boards, along the entire periphery of the panel; this support considerably increases the resistance of the panel to compression in the critical peripheral position.

At the same time, the ribbing allows attaining the aforementioned advantage by limiting the volume of molten material and the ensuing eruption, back flow, reflux, overflow, splashes or dirtying events that may be a result of the continuous forced displacement of a greater volume of molten material.

This limitation of molten material may alternatively be attained by providing a two-component web with expanded material in the area intended for melting; however, this alternative does not allow implementing the method with a ultrasonic melting device but it would operate only using the laser technique and thus it would not be useful in case of the ultrasonic solution.

### KEY TO REFERENCE NUMBERS

- 1A): first example of the device for implementing the method according to the invention
- 1B): second example of the device for implementing the method according to the invention
- 1C): third example of the device for implementing the method according to the invention
- 2): edging web
- 3): grooved face of the edging web
- 3A): molten longitudinal abutment lines of the grooved face of the edging web
- 4): web supply rollers
- 5): panel edges
- 6): hollow core wood panels
- 7): conveyor
- 8A): laser bonding unit
- 8B): hot air or plasma bonding unit
- 8C): Ultrasonic bonding unit
- 9): laser beams generator
- 10): laser beams
- 11): hot air or plasma flow diffuser
- 12): hot air or plasma flow diffuser
- 13): sonotrode pneumatic pressure cylinder
- 14): rotary sonotrode
- 15): piezoelectric transducer
- 16): hollow core wood panel boards
- 16A): board projection
- 16B): board projection
- 17): hollow core wood panel honeycomb
- 18): surplus edging web in the application to the hollow core wood panel

## Claims

1. Method for edging sandwich hollow core wood panels (6) made of composite material and the like in the industrial production of furniture, of the type formed by flat table-like structures comprising two thin sheets or boards (16) made of material with mechanical resistance characteristics, typically sheets made of plywood, mdf (medium-density fibreboard) or chipboard, mutually interspaced from each other to constitute the faces of the panel (6) and rigidly connected through a structural bonding agent to a connective element with light characteristics, typically of the plastic or aluminium honeycomb type, comprising the application of a thermoplastic web (2) to the edges (5) of said hollow core wood panel (6), abutting against the projections (16A, 16B) of the boards (16) prominently dominating on the edges (5) with respect to the thickness of spacing/connection material (17) interposed therebetween, wherein it comprises surface softening or melting of a face (3) of the web (2) limitedly localised on its abutment lines (3A) interfacing the projections (16A, 16B) of the boards (16); mutual pressing of the web (2) and edges (5) and the relative projections (16A, 16B) thereof exerted on the web (2) and/or on the panel (6); adhesion of the web (2) on the edges (5) of the panel (6) for penetrating the projections (16A, 16B) of the boards (16) into the molten abutment lines (3A) of the edging web (2); and stable coupling of the projections (16A, 16B) of the boards (16) within the residual recesses with respect to the arrangement of the faced molten material abutting against the solid residual material of the inner face (3) of the web (2); **characterised in that**, the web has, at least on the face (3), surface embossing or knurling or surface roughness modelling shaped with surface roughness orthogonal to the linear dimension axis; and the method being actuated by a welding group (8B) supported housed in the space contained in the dihedral convergence between the web (2) and the panel (6) and constituted by a diffuser (11) of hot air or plasma supplied by two ducts (12), shaped and adjustably positionable, to convey the respective jets on the grooved face (3) of the web (2) while the web (2) is made to advance.

2. Method according to claim 1, **characterised in that** it comprises application of said web (2) by continuous or step-by-step advancement of said web (2) guided and held with adhesive convergence to the edges (5) of said panels (6), with transversely corrugated face (3) interfaced at contact with said projections (16A, 16B); surface softening/melting, before or after the convergence of the web (2) abutting against the projections (16A, 16B) of the boards (16), with longitudinal abutment lines (3A) of the transversely corrugated face (3) of the web (2), limited to the abutment lines (3A) and neighbouring areas, preferably closely neighbouring, of said projections (16A, 16B); adhesion of the web (2) at the edges (5) of the panel (6) for the penetration and cohesion of the projections (16A, 16B) within the surface molten or softened abutment lines (3A) of the transversely corrugated face (3) of the web (2) and subsequent recovery.

3. Method according to claim 2 wherein said at least one face (3) of the polymeric thermoplastic web (2), is grooved on site or simultaneously with the production extrusion of the web (2).

4. Method according to any one of claims 1 to 3, **characterised in that it** is actuated by a welding group (8) constituted by any means suitable for generating and directing heat energy in a circumscribed manner, and housed in the space contained in the convergence dihedral between the track for supplying the edging web (2) and a conveyor (7) of the panels (6), which marks two parallel melting abutment lines (3A) on the surface of the face (3) of the edging web (2) in the portions involving the projections (16A, 16B) of the boards (16) of the panel (6) so that due to the pressure there is formed a coupling between the edging web (2) and the boards (16).

5. Method according to any of the preceding claims, **characterised in that** it is actuated by welding groups (8) equal and symmetric simultaneously operating on the two sides of the hollow core wood panel (6).

## Patentansprüche

1. Verfahren zum Umleimen von mehrschichtigen Hohlkernholzplatten (6), die aus Verbundmaterial und dergleichen hergestellt sind, bei der industriellen Fertigung von Möbeln der Art, die durch flache tischartige Strukturen gebildet sind, die zwei dünne Platten oder Bretter (16), die aus Material mit mechanischen Widerstandseigenschaften hergestellt sind, typischerweise Platten aus Sperrholz, MDF (mitteldichte Holzfaserplatten) oder Spanplatten, umfassen, die gegenseitig voneinander beabstandet sind, um die Seiten der Platte (6) zu bilden, und über einen Strukturklebstoff mit einem Verbindungselement mit leichten Eigenschaften, typischerweise vom Kunststoff- oder Aluminiumwabentyp, fest verbunden sind, umfassend das Anbringen einer thermoplastischen Bahn (2) an den Kanten (5) der Hohlkernholzplatte (6), die an die Vorsprünge (16A, 16B) der Bretter (16) anstößt, die deutlich an den Kanten (5) in Bezug auf die Dicke des dazwischen angeordneten Abstandhalter-/Verbindungsmaterials (17) hervorragen, wobei dies Folgendes umfasst: oberflächliches Erweichen oder Schmelzen einer Seite (3) der Bahn (2), lokal begrenzt auf ihre Stoßlinien (3A), die an die Vorsprünge (16A, 16B) der Bretter (16) anschließen; Aneinanderdrücken der Bahn (2) und der Kanten (5) und der relativen Vorsprünge (16A, 16B) davon gegen die Bahn (2) und/oder die Platte (6); Verkleben der Bahn (2) mit den Kanten (5) der Platte (6), sodass die Vorsprünge (16A, 16B) der Bretter (16) in die geschmolzen Stoßlinien (3A) der Kantenbahn (2) eindringen; und stabiles Koppeln der Vorsprünge (16A, 16B) der Bretter (16) innerhalb der restlichen Vertiefungen in Bezug auf die Anordnung des angrenzenden geschmolzenen Materials, das an das feste Restmaterial der Innenseite (3) der Bahn (2) anstößt; **dadurch gekennzeichnet, dass** die Bahn wenigstens auf der Seite (3) eine Oberflächenprägung oder -riffelung oder raue Oberflächenmodellierung aufweist, die mit Oberflächenrauheit senkrecht zur Achse der linearen Abmessung geformt ist; und dass das Verfahren durch eine Schweißgruppe (8B) durchgeführt wird, die in dem Raum gelagert untergebracht ist, der beim zweiflächigen Zusammenlaufen zwischen der Bahn (2) und der Platte (6) enthalten ist, und die durch einen Verteiler (11) für Heißluft oder Plasma gebildet wird, die bzw. das durch zwei Kanäle (12) zugeführt wird, die so geformt und anpassbar positionierbar sind, dass sie die jeweiligen Strahlen auf die gerillte Seite (3) der Bahn (2) befördert, während die Bahn (2) vorgeschoben wird.

2. Verfahren nach Anspruch 1, **dadurch gekennzeichnet, dass** es Folgendes umfasst: Anbringen der Bahn (2) durch kontinuierliches oder schrittweises Vorschieben der Bahn (2), die durch verklebendes Zusammenlaufen zu den Kanten (5) der Platten (6) geführt und gehalten wird, wobei die quer geriffelte Seite (3) bei Kontakt an die Vorsprünge (16A, 16B) anschließt; oberflächliches Erweichen/Schmelzen vor oder nach dem Zusammenlaufen der Bahn (2), die gegen die Vorsprünge (16A, 16B) der Bretter (16) anstößt, mit Längsstoßlinien (3A) der quer geriffelten Seite (3) der Bahn (2), die durch die Stoßlinien (3A) und benachbarte, bevorzugt eng benachbarte, Bereiche der Vorsprünge (16A, 16B) begrenzt sind; Verkleben der Bahn (2) an den Kanten (5) der Platte (6) zum Eindringen und Verkleben der Vorsprünge (16A, 16B) innerhalb der oberflächlich geschmolzenen oder erweichten Stoßlinien (3A) der quer geriffelten Seite (3) der Bahn (2) und anschließend Entnehmen.

3. Verfahren nach Anspruch 2, wobei die wenigstens eine Seite (3) der thermoplastischen Polymerbahn (2) vor Ort oder gleichzeitig mit der Extrusionsfertigung der Bahn (2) gerillt wird.

4. Verfahren nach einem der Ansprüche 1 bis 3, **dadurch gekennzeichnet, dass** es durch eine Schweißgruppe (8) durchgeführt wird, die durch ein beliebiges Mittel gebildet wird, das zum Erzeugen und Richten von Wärmeenergie in einer umschreibenden Weise geeignet ist, und die in dem Raum untergebracht ist, der beim zweiflächigen Zusammenlaufen zwischen der Strecke zum Zuführen der Kantenbahn (2) und einem Förderer (7) für die Platten (6) enthalten ist, welche zwei parallele Schmelzstoßlinien (3A) auf der Oberfläche der Seite (3) der Kantenbahn (2) in den Abschnitten markiert, welche die Vorsprünge (16A, 16B) der Bretter (16) der Platte (6) beinhalten, sodass aufgrund des Drucks eine Kopplung zwischen der Kantenbahn (2) und den Brettern (16) gebildet wird.

5. Verfahren nach einem der vorhergehenden Ansprüche, **dadurch gekennzeichnet, dass** es durch Schweißgruppen (8) durchgeführt wird, die gleich und symmetrisch gleichzeitig auf den zwei Seiten der Hohlkernholzplatte (6) betrieben werden.

## Revendications

1. Procédé de finition de bords de panneaux de bois à âme creuse (6) d'intercalage constitués d'un matériau composite et similaire dans la production industrielle de meuble, du type formé par des structures de type table plate comprenant deux minces feuilles ou planches (16) constituées d'un matériau ayant des caractéristiques de résistance mécanique, typiquement des feuilles constituées de contreplaqué, de MDF (panneau de fibres de densité moyenne) ou d'aggloméré, mutuellement espacées l'une de l'autre pour constituer les faces du panneau (6) et raccordées de façon rigide par le biais d'un agent de liaison structurel à un élément de raccordement ayant des caractéristiques légères, typiquement du type alvéolaire en plastique ou en aluminium, comprenant l'application d'une bande thermoplastique (2) sur les bords (5) dudit panneau de bois à âme creuse (6), la mise en butée contre les saillies (16A, 16B) des planches (16) dominant de façon proéminente les bords (5) vis-à-vis de l'épaisseur du matériau d'espacement/raccordement (17) interposé entre elles, dans lequel il comprend un ramollissement ou une fusion de surface d'une face (3) de la bande (2) de façon localisée limitée sur ses lignes de butée (3A) en interface avec les saillies (16A, 16B) des planches (16) ; le pressage mutuel de la bande (2) et des bords (5) et des saillies (16A, 16B) relatives de ceux-ci sur la bande (2) et/ou sur le panneau (6) ; le collage de la bande (2) sur les bords (5) du panneau (6) pour faire pénétrer les saillies (16A, 16B) des planches (16) dans les lignes de butée (3A) fondues de la bande de finition de bords (2) ; et le couplage stable des saillies (16A, 16B) des planches (16) au sein des évidements résiduels vis-à-vis de l'agencement du matériau fondu de face en butée contre le matériau résiduel solide de la face interne (3) de la bande (2) ; **caractérisé en ce que**, la bande a, au moins sur la face (3), un gaufrage ou un cannelage de surface ou un modelage de rugosité de surface mis en forme avec une rugosité de surface orthogonale à l'axe de dimension linéaire ; et le procédé étant mis en action par un groupe de soudage (8B) supporté logé dans l'espace contenu dans la convergence de dièdre entre la bande (2) et le panneau (6) et constitué par un diffuseur (11) d'air chaud ou de plasma alimenté par deux conduits (12), mis en forme et positionnables de façon réglable, pour acheminer les jets respectifs sur la face rainurée (3) de la bande (2) tandis que la bande (2) est amenée à avancer.

2. Procédé selon la revendication 1, **caractérisé en ce qu'**il comprend l'application de ladite bande (2) par avancée continue ou pas à pas de ladite bande (2) guidée et maintenue avec une convergence de collage sur les bords (5) desdits panneaux (6), avec une face ondulée transversalement (3) mise en interface au contact desdites saillies (16A, 16B) ; le ramollissement/la fusion de surface, avant ou après la convergence de la bande (2) en butée contre les saillies (16A, 16B) des planches (16), avec des lignes de butée (3A) longitudinales de la face ondulée transversalement (3) de la bande (2), limité(e) aux lignes de butée (3A) et à des zones voisines, de préférence très voisines, desdites saillies (16A, 16B) ; le collage de la bande (2) au niveau des bords (5) du panneau (6) pour la pénétration et la cohésion des saillies (16A, 16B) au sein des lignes de butée (3A) ramollies ou fondues en surface de la face ondulée transversalement (3) de la bande (2) et la récupération ultérieure.

3. Procédé selon la revendication 2, dans lequel ladite au moins une face (3) de la bande (2) thermoplastique polymère, est rainurée sur site ou simultanément avec l'extrusion de production de la bande (2).

4. Procédé selon l'une quelconque des revendications 1 à 3, **caractérisé en ce qu'**il est mis en action par un groupe de soudage (8) constitué par tout moyen approprié pour générer et diriger une énergie thermique de manière circonscrite, et logé dans l'espace contenu dans le dièdre de convergence entre la voie d'apport de la bande de finition de bords (2) et un convoyeur (7) des panneaux (6), qui marque deux lignes de butée (3A) en fusion parallèles sur la surface de la face (3) de la bande de finition de bords (2) dans les portions impliquant les saillies (16A, 16B) des planches (16) du panneau (6) de sorte qu'en raison de la pression un couplage se forme entre la bande de finition de bords (2) et les planches (16).

5. Procédé selon l'une quelconque des revendications précédentes, **caractérisé en ce qu'**il est mis en action par des groupes de soudages (8) égaux et symétriques fonctionnant simultanément sur les deux côtés du panneau de bois à âme creuse (6).
